# EUROPÄISCHE PATENTSCHRIFT

(11) **EP 3 855 046 B1**
(45) Veröffentlichungstag und Bekanntmachung des Hinweises auf die Patenterteilung: **12.07.2023**
(21) Anmeldenummer: 21152318.8
(22) Anmeldetag: 19.01.2021
(51) Int. Cl.: F16H 25/24

(54) **SPINDELANTRIEB**
SPINDLE DRIVE
ENTRAÎNEMENT À BROCHE

(30) Priorität: 24.01.2020 DE 102020101771
(43) Veröffentlichungstag der Anmeldung: 28.07.2021
(73) Patentinhaber: STABILUS GmbH, 56070 Koblenz (DE)
(72) Erfinder: Theis, Christof, 56204 Hillscheid (DE); Hillen, Jörg, 56283 Nörtershausen (DE); Keßler, Jonathan, 56412 Großholbach (DE); Bochen, Jan, 56337 Eitelborn (DE)
(74) Vertreter: Bernsmann, Falk

(56) Entgegenhaltungen:
- DE-A1-102011 117 857
- DE-B3-102014 118 379
- DE-B4-102011 117 857

## Beschreibung

Die Erfindung bezieht sich auf einen Spindelantrieb für eine motorische Verstellung eines Verstellelements eines Kraftfahrzeugs, mit einem rohrförmigen oder halbschalenförmigen Spindelantriebsgehäuse, in dessen einem Endbereich ein ring- oder scheibenförmiges Verbindungsteil eingesetzt und befestigt ist, das über ein Dämpfungselement aus einem elastischen Dämpfungsmaterial mit einem Anschluß zum Ausleiten von axialen Antriebsbewegungen verbunden ist.

Ein derartiger Spindelantrieb ist aus der DE 10 2014 118 379 B3 bekannt, bei dem das Verbindungsteil einen ersten flanschartigen Endabschnitt und einen zweiten flanschartigen Endabschnitt aufweist, wobei sich die einander zugewandten Stirnseiten der Endabschnitte in einem Abstand zueinander gegenüberliegen und in diesem Abstand die Dämpfungsanordnung angeordnet ist.

Bei einem weiteren derartigen Spindelantrieb ist es bekannt, Dämpfungsmaterial in einer im Verbindungsteil ausgebildeten Dämpfungsdose fest anzuordnen. Durch das Dämpfungsmaterial sollen die bei dem Betrieb des Spindelantriebs entstehenden Schwingungen isoliert und damit eine Übertragung auf das Verstellelement vermieden werden. Bei einem z.B. als Klappe ausgebildeten Verstellelement würden sonst diese Schwingungen störende Geräusche erzeugen. In dieses Dämpfungsmaterial ragt ein Halsabschnitt des Anschusses hineinragt, der innerhalb des Dämpfungsmaterials einen sich radial erstreckenden Halteabschnitt aufweist. Bei einer Bewegung des Spindelantriebs gegen das Verstellelement wird der Boden der Dämpfungsdose über das Dämpfungsmaterial gegen den Halteabschnitt gedrückt. Bei einer auf den Anschluß ziehend wirkenden Bewegung des Spindelantriebs wird das von dem Halteabschnitt anschlußseitige Dämpfungsmaterial ohne Begrenzung gedehnt. Dies führt auf Dauer zu einer Ermüdung dieses Teils des Dämpfmaterials und damit zu einem frühzeitigen Verschleiß. Eine solche ziehende Belastung entsteht z.B. dann, wenn das Verstellelement, das als Klappe ausgebildet sein kann, manuell ziehend belastet wird.

Aufgabe der Erfindung ist es daher einen Spindelantrieb der eingangs genannten Art zu schaffen, die bei einfachem Aufbau und einfacher Montage die bei dem Betrieb des Spindelantriebs entstehenden Schwingungen isoliert und eine lange Lebensdauer des Spindelantriebs ermöglicht.

Diese Aufgabe wird erfindungsgemäß dadurch gelöst, daß das Verbindungsteil eine koaxiale Ausnehmung aufweist, die in ihrer inneren radial umlaufender Wandung eine radial umlaufende Nut aufweist, wobei der Anschluß mit seinem dem Spindelantriebsgehäuse zugewandten Endbereich axial in die Ausnehmung des Verbindungsteils ragt und einen radial in die Nut ragenden radial umlaufenden Flansch besitzt, wobei zwischen den Seitenwänden der Nut und den Seitenwänden des Flansches ein Spalt vorhanden ist, in dem das Dämpfungselement angeordnet ist.

Durch das Dämpfungselement werden die bei dem Betrieb des Spindelantriebs entstehenden Schwingungen isoliert und nicht auf das Verstellelement übertragen, so daß durch die Schwingungen keine störenden Geräusche entstehen.

Eine Verformung des Dämpfungselements erfolgt sowohl bei Zug- als auch bei Druckbelastung durch die Spalte zwischen den Seitenwänden des Flansches des Anschlusses und den Seitenwänden der Nut des Verbindungsteils nur begrenzt, so daß es nicht zu einer Ermüdung des Dämpfmaterials und damit zu dessen frühzeitigen Verschleiß kommt.

Um eine unterschiedliche Dämpfung bei Zugbelastung gegenüber einer Druckbelastung zu erhalten, können die Spalte spindelantriebsseitig und anschlußseitig mit Dämpfungsmaterial unterschiedlicher Elastizität gefüllt sein. Es ist aber auch möglich, daß dazu die Spalte auf einer Seite des Flansches profiliert und auf der anderen Seite nichtprofiliert ausgebildet sind.

Durch die radial gerichtete Nut und den radial gerichteten Flansch ist ein Ausknicken des Anschlusses insbesondere bei einer Zugbelastung vermieden.

Zur Erhöhung des Dämpfvermögens kann zwischen dem Boden der Nut und der äußeren radial umlaufenden Fläche des Flansches ein zweiter Spalt vorhanden sein, in dem ein zweites Teil des Dämpfungselements angeordnet ist. Damit können die Breiten der Spalte geringer ausgebildet werden, was auch zu einer Verringerung der Baugröße des Spindelantriebs führt.

Der Flansch kann einen konus- oder teilkonusartig sich radial nach außen verjüngenden Querschnitt und die Nut einen entsprechenden Querschnitt aufweisen.

Ohne wesentliche Vergrößerung der Baulänge des Spindelantriebs kann die wirksame Masse an Dämpfungsmaterial bei Begrenzung der Verformung des Dämpfungselements sowohl bei Zug- als auch bei Druckbelastung erfolgen, wenn der Anschluß einen der äußeren Stirnfläche des Verbindungsteils axial gegenüberliegenden Abstützflansch aufweist, wobei zwischen der äußeren Stirnfläche des Verbindungsteils und dem Abstützflansch ein zweiter Spalt vorhanden ist, in dem ein drittes Teil des Dämpfungselements angeordnet ist.

Einfach herstellbar ist es, wenn das Dämpfungselement aus einer Kunststoffausspritzung des oder der Spalte zwischen dem Verbindungsteil und dem Anschluß besteht.

Es ist aber auch einfach herstellbar, wenn das Dämpfungselement ein vorgefertigtes Dämpfungselement ist, das auf die Kontur des Flansches und ggf. des Abstützflanschs oder auf die Kontur der Nut und ggf. die Stirnfläche des Verbindungsteils aufvulkanisiert ist.

Zur einfachen Verbindung des Anschlusses mit dem Verbindungsteil kann das ring- oder scheibenförmige Verbindungsteil aus zwei oder mehreren Ring- oder Scheibensegmenten bestehen.

Dabei werden erst die Ring- oder Scheibenelemente das spindelantriebsseitige Ende des Anschlusses umschließend auf den Anschluß aufgesetzt und diese vormontierte Baugruppe dann in das rohrförmige Spindelantriebsgehäuse eingesetzt und mit diesem fest verbunden. Durch das rohrförmige Spindelantriebsgehäuse werden dann die Ring- oder Scheibensegmente zu einem ring- oder scheibenförmigen Verbindungsteil zusammengehalten.

Vorzugsweise sind die zwei oder mehreren Ring- oder Scheibensegmente gleiche zwei oder mehrere Ring- oder Scheibensegmente.

Damit wird eine rationierte Herstellung und Lagerhaltung ermöglicht.

Vorzugsweise ist das Verbindungsteil formschlüssig mit dem rohrförmigen oder halbschalenförmigen Spindelantriebsgehäuse verbunden.

Besonders einfach ist es dabei, wenn das Verbindungsteil mit dem Spindelantriebsgehäuse radial verbördelt ist.

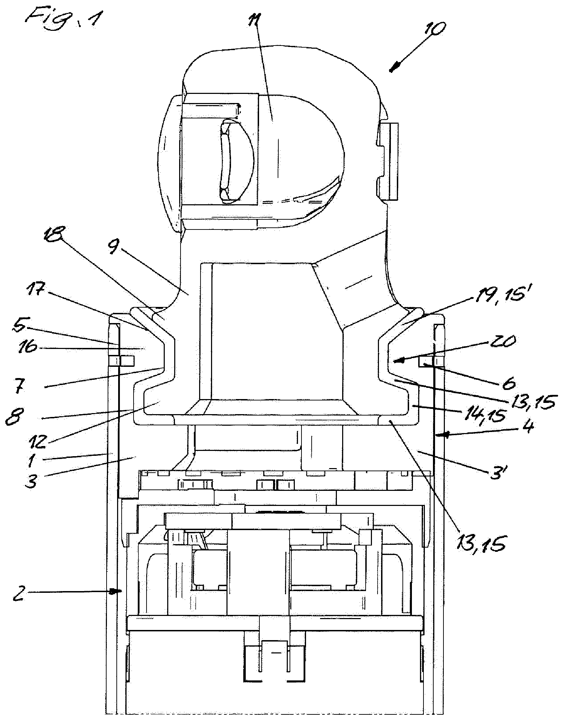

Ein Ausführungsbeispiel der Erfindung ist in der Zeichnung dargestellt und wird im Folgenden näher beschrieben. Es zeigen
- Figur 1: einen Längsschnitt eines Endbereichs eines Spindelantriebs

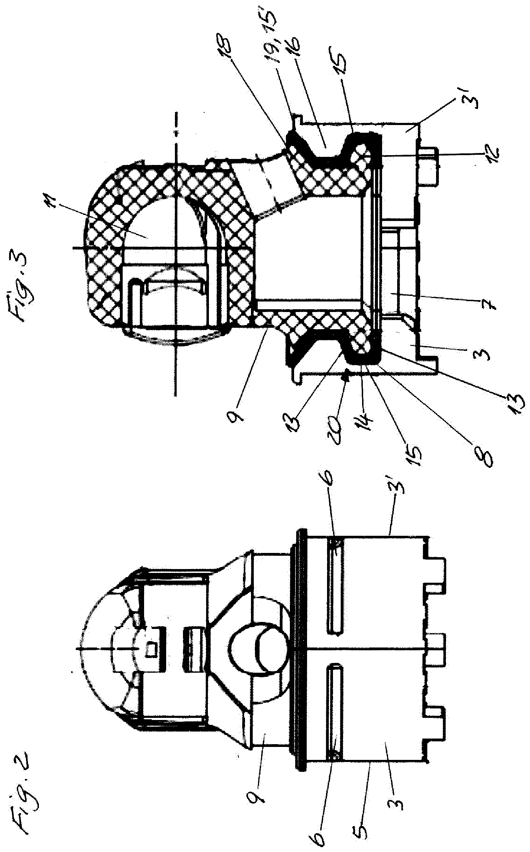

- Figur 2: eine Seitenansicht der Baugruppe Verbindungsteil-Anschluß des Spindelantriebs nach Figur 1
- Figur 3: einen Längsschnitt der Baugruppe nach Figur 2.

Der in den Figuren dargestellte Spindelantrieb weist ein rohrförmiges Spindelantriebsgehäuse 1 eines Endbereichs eines Spindelantriebs auf, in dem ein motorischer Antrieb 2 des Spindelantriebs angeordnet ist.

In den Endbereich des Spindelantriebsgehäuses 1 ist ein aus zwei identischen Ringsegmenten 3, 3' gebildetes ringförmiges Verbindungsteil 4 eingesetzt, das gleichen Außendurchmesser wie dem Innendurchmesser des Spindelantriebsgehäuse 1 aufweist und das an seiner äußeren radial umlaufenden zylindrischen Mantelfläche 5 eine radial umlaufende Ringnut 6 besitzt. In die Ringnut 6 ist Material des aus Metall bestehenden Spindelantriebsgehäuses 1 durch radiales Verformen hineinverformt und so das Verbindungsteil 4 fest mit Spindelantriebsgehäuse 1 verbunden.

Das Verbindungsteil 4 weist eine koaxiale Ausnehmung 7 auf, die in ihrer inneren radial umlaufenden zylindrischen Wandung eine radial umlaufende ringförmige Nut 8 aufweist.

In die Ausnehmung 7 ragt ein Kugelpfannenzapfen 9 eines als Winkelgelenk ausgebildeten Kugelgelenks, das einen Anschluß 10 bildet. An dem der Ausnehmung 7 entgegengesetzten Ende des Kugelpfannenzapfens 9 ist eine Kugelpfanne 11 angeordnet.

An dem in die Ausnehmung 7 ragenden Bereich des Kugelpfannenzapfens 9 ist ein derart radial in die Nut 8 ragender Flansch 12 angeordnet, daß zwischen den Seitenwänden des Flanschs 12 und den Seitenwänden der Nut 8 erste Spalte 13 gebildet sind. Weiterhin ist zwischen dem Boden der Nut 8 und der radial umlaufenden äußeren Fläche des Flansches 12 ein zweiter Spalt 14 etwa gleicher Breite wie die ersten Spalte 13 gebildet.

Der Flansch 12 weist einen sich radial nach außen verjüngenden Querschnitt auf und die Nut 8 besitzt einen entsprechenden Querschnitt.

Die zwischen dem Flansch 12 und der Nut 8 gebildeten Spalte 13 und 14 sind mit einem elastischen Dämpfungsmaterial 15 ausgefüllt.

Anschlußseitig schließt sich an die Nut 8 ein radial nach innen gerichteter Ringansatz 16 des Verbindungsteils 4 an, dessen zur Kugelpfanne 11 gerichtete Seite eine äußere Stirnseite 17 des Verbindungsteils 4 bildet.

Der Kugelpfannenzapfen 9 besitzt einen radial nach außen gerichteten und über die Stirnseite 17 sich erstreckenden Abstützflansch 18 auf. Zwischen der Stirnseite 17 und dem Abstützflansch 18 ist ein in seiner Dicke etwa den Spalten 13 und 14 entsprechender dritter Spalt 19 gebildet, der die sich auch um die radial innere Ringfläche des Ringansatzes 16 erstreckt. Dieser dritte Spalt 19 ist ebenfalls mit einem elastischen Dämpfungsmaterial 15' ausgefüllt.

Die während des Betriebs des Spindelantriebs von dem motorischen Antrieb 2 erzeugten und auf das Spindelantriebsgehäuse 1 sowie das Verbindungsteil 4 einwirkenden Schwingungen können sich nur stark reduziert auf den Anschluß 10 und das nicht dargestellte daran angeordnete Verstellelement übertragen und dadurch störende Geräusche erzeugen, da sie von dem ein Dämpfungselement 20 bildenden Dämpfmaterial 15, 15' isoliert werden.

Die axiale Verformung des Dämpfungsmaterials 15, 15' ist aber sowohl bei einer Zugbelastung als auch einer Druckbelastung des Anschlusses 10 begrenzt, da es in den Spalten 13, 14 und 19 axial beidseitig begrenzt und abgestützt ist. Somit wird auch insbesondere eine axiale Dehnung des Dämpfungsmaterials 15, 15' begrenzt, so daß es nicht zu einer Ermüdung des Dämpfungsmaterials 15, 15' und damit zu dessen frühzeitigem Verschleiß kommt.

### Bezugszeichenliste

- 1: Spindelantriebsgehäuse
- 2: motorischer Antrieb
- 3: Ringsegment
- 3': Ringsegment
- 4: Verbindungsteil
- 5: Mantelfläche
- 6: Ringnut
- 7: Ausnehmung
- 8: Nut
- 9: Kugelpfannenzapfen
- 10: Anschluß
- 11: Kugelpfanne
- 12: Flansch
- 13: erste Spalte
- 14: zweiter Spalt
- 15: Dämpfungsmaterial
- 15': Dämpfungsmaterial
- 16: Ringansatz
- 17: äußere Stirnseite
- 18: Abstützflansch
- 19: dritter Spalt
- 20: Dämpfungselement

## Patentansprüche

1. Spindelantrieb für eine motorische Verstellung eines Verstellelements eines Kraftfahrzeugs, mit einem rohrförmigen oder halbschalenförmigen Spindelantriebsgehäuse (1), in dessen einem Endbereich ein ring- oder scheibenförmiges Verbindungsteil (4) eingesetzt und befestigt ist, das über ein Dämpfungselement (20) aus einem elastischen Dämpfungsmaterial (15, 15') mit einem Anschluß (10) zum Ausleiten von axialen Antriebsbewegungen verbunden ist, **dadurch gekenn- zeichnet**, daß das Verbindungsteil (4) eine koaxiale Ausnehmung (7) aufweist, die in ihrer inneren radial umlaufender Wandung eine radial umlaufende Nut (8) aufweist, wobei der Anschluß (10) mit seinem dem Spindelantriebsgehäuse (1) zugewandten Endbereich axial in die Ausnehmung (7) des Verbindungsteils (4) ragt und einen radial in die Nut (8) ragenden radial umlaufenden Flansch (12) besitzt, wobei zwischen den Seitenwänden der Nut (8) und den Seitenwänden des Flansches (12) ein Spalt (13, 14) vorhanden ist, in dem das Dämpfungselement (20) angeordnet ist.

2. Spindelantrieb nach Anspruch 1, **dadurch gekennzeichnet, daß** zwischen dem Boden der Nut (8) und der äußeren radial umlaufenden Fläche des Flansches (12) ein zweiter Spalt (14) vorhanden ist, in dem ein zweites Teil des Dämpfungselements (20) angeordnet ist.

3. Spindelantrieb nach einem der vorhergehenden Ansprüche,
**dadurch gekennzeichnet, daß** der Flansch (12) einen konus- oder teilkonusartig sich radial nach außen verjüngenden Querschnitt und die Nut (8) einen entsprechenden Querschnitt aufweist.

4. Spindelantrieb nach einem der vorhergehenden Ansprüche,
**dadurch gekennzeichnet, daß** der Anschluß (10) einen der äußeren Stirnfläche (17) des Verbindungsteils (4) axial gegenüberliegenden Abstützflansch (18) aufweist, wobei zwischen der äußeren Stirnfläche (17) des Verbindungsteils (4) und dem Abstützflansch (18) ein zweiter Spalt (14) vorhanden ist, in dem ein drittes Teil des Dämpfungselements (20) angeordnet ist.

5. Spindelantrieb nach einem der vorhergehenden Ansprüche,
**dadurch gekennzeichnet, daß** das Dämpfungselement aus einer Kunststoffausspritzung des oder der Spalte zwischen dem Verbindungsteil und dem Anschluß besteht.

6. Spindelantrieb nach einem der Ansprüche 1 bis 4, **dadurch gekennzeichnet, daß** das Dämpfungselement ein vorgefertigtes Dämpfungselement ist, das auf die Kontur des Flansches und ggf. des Abstützflanschs oder auf die Kontur der Nut und ggf. der Stirnfläche des Verbindungsteils aufvulkanisiert ist.

7. Spindelantrieb nach einem der vorhergehenden Ansprüche,
**dadurch gekennzeichnet, daß** das ring- oder scheibenförmige Verbindungsteil (4) aus zwei oder mehreren Ring- oder Scheibensegmenten (3, 3') besteht.

8. Spindelantrieb nach Anspruch 7, **dadurch gekennzeichnet, daß** die zwei oder mehreren Ring- oder Scheibensegmente (3, 3') gleiche zwei oder mehrere Ring- oder Scheibensegmente (3, 3') sind.

9. Spindelantrieb nach einem der vorhergehenden Ansprüche,
**dadurch gekennzeichnet, daß** das Verbindungsteil (4) formschlüssig mit dem rohrförmigen Spindelantriebsgehäuse (1) verbunden ist.

10. Spindelantrieb nach Anspruch 9, **dadurch gekennzeich- net**, daß das Verbindungsteil mit dem Spindelantriebsgehäuse radial verbördelt ist.

## Claims

1. A spindle drive for a motorized adjustment of an adjustment element of a motor vehicle, comprising a tubular or semi-shell-shaped spindle drive housing (1) and an annular or disk-shaped connecting part (4) inserted and secured in one end region of the spindle drive housing (1), the connecting part (4) being connected via a damping element (20) made of an elastic damping material (15, 15') to a connector (10) for discharging axial drive movements,
**characterized in that**
the connecting part (4) has a coaxial recess (7) which has a circumferential groove (8) in its inner, circumferential wall, the connector (10) projecting axially into the recess (7) of the connecting part (4) with its end region facing the spindle drive housing (1) and having a circumferential flange (12) projecting radially into the groove (8), a gap (13, 14) being arranged between the side walls of the groove (8) and the side walls of the flange (12), the damping element (20) being arranged in the gap (13, 14).

2. The spindle drive according to claim 1, wherein a second gap (14) is arranged between the base of the groove (8) and an outer circumferential face of the flange (12), a second portion of the damping element (20) being disposed in the second gap (14).

3. The spindle drive according to one of the preceding claims, wherein the flange (12) has a cross section that tapers radially outward in a conical or partially conical manner and the groove (8) has a corresponding cross section.

4. The spindle drive according to one of the preceding claims, wherein the connector (10) has a support flange (18) being arranged axially opposite the outer end side (17) of the connecting part (4), wherein a second gap (14) is disposed between the outer end side (17) of the connecting part (4) and the support flange (18), a third portion of the damping element (20) being arranged in the second gap (14).

5. The spindle drive according to one of the preceding claims, wherein the damping element is made of a plastics material injection moulded into the gap (13, 14) or gaps (13, 14) between the connecting part (4) and the connector (10).

6. The spindle drive according to one of claims 1 to 4, wherein the damping element (20) is a prefabricated damping element (20) which is vulcanized onto the contour of the flange (12), and preferably of the support flange (18), or the contour of the groove (8), and preferably on the outer end side (17), of the connecting part (4).

7. The spindle drive according to one of the preceding claims, wherein the annular or disk-like connecting part (4) consists of two or more annular or disk-like segments (3, 3').

8. The spindle drive according to claim 7, wherein the two or more annular or disk-like segments (3, 3') are two or more identical annular or disk-like segments (3, 3').

9. The spindle drive according to one of the preceding claims, wherein the connecting part (4) is connected to the tubular spindle drive housing (1) in a positive-locking manner.

10. The spindle drive according to claim 9, wherein the connecting part (4) is crimped radially to the spindle drive housing (1).

## Revendications

1. Entraînement à broche pour le réglage motorisé d'un élément de réglage d'un véhicule automobile avec un boîtier d'entraînement à broche tubulaire ou en forme de demi-coque (1), dans une extrémité duquel une pièce de liaison annulaire ou en forme de disque (4) est insérée et fixée, la pièce de liaison (4) présentant un élément d'amortissement (20) en un matériau d'amortissement élastique (15, 15') étant relié à un raccord (10) pour évacuer des mouvements d'entraînement axiaux,
**caractérisé en ce que**
la pièce de liaison (4) présente un évidement coaxial (7) qui présente dans sa paroi intérieure circonférentielle une rainure (8) circonférentielle, le raccord (10) faisant saillie axialement dans l'évidement (7) de la pièce de liaison (4) avec sa zone d'extrémité tournée vers le boîtier d'entraînement à broche (1) et ayant un rebord circonférentiel (12) faisant saillie radialement dans la rainure (8), un espace (13, 14) étant agencé entre les parois latérales de la rainure (8) et les parois latérales du rebord (12), l'élément d'amortissement (20) étant agencé dans l'espace (13, 14).

2. Entraînement à broche selon la revendication 1, **caractérisé en ce qu'**il existe un deuxième espace (14) entre le fond de la rainure (8) et la surface circonférentielle extérieure du rebord (12), une deuxième partie de l'élément amortisseur (20) étant disposée dans le deuxième espace (14).

3. Entraînement à broche selon l'une des revendications précédentes, **caractérisé en ce que** le rebord (12) présente une section conique ou partiellement conique s'effilant radialement vers l'extérieur et la rainure (8) présente une section correspondante.

4. Entraînement à broche selon l'une des revendications précédentes, **caractérisé en ce que** le raccord (10) présente un rebord de support (18) axialement opposée à la face frontale extérieure (17) de la pièce de liaison (4), un deuxième espace (14) existant entre la face frontale extérieure (17) de la pièce de liaison (4) et le rebord de support (18), une troisième partie de l'élément d'amortissement (20) étant disposée dans le deuxième espace (14).

5. Entraînement à broche selon l'une des revendications précédentes, **caractérisé en ce que** l'élément d'amortissement (20) consiste en un moulage par injection de matière plastique de l'espace (13, 14) ou des espaces (13, 14) entre la pièce de liaison (4) et le raccord (10).

6. Entraînement à broche selon l'une des revendications 1 à 4, **caractérisé en ce que** l'élément d'amortissement (20) est un élément d'amortissement (20) préfabriqué qui est vulcanisé sur le contour du rebord (12), et de préférence du rebord de support (18), ou sur le contour de la rainure (8), et de préférence de la face frontale (17), de la pièce de liaison (4).

7. Entraînement à broche selon l'une des revendications précédentes, **caractérisé en ce que** la pièce de liaison annulaire ou en forme de disque (4) est constituée de deux ou plusieurs segments annulaires ou de disque (3, 3').

8. Entraînement à broche selon la revendication 7, **caractérisé en ce que** les deux ou plusieurs segments annulaires ou de disque (3, 3') sont deux ou plusieurs segments annulaires ou de disque (3, 3') identiques.

9. Entraînement à broche selon l'une des revendications précédentes, **caractérisé en ce que** la pièce de liaison (4) est reliée par complémentarité de forme au boîtier tubulaire d'entraînement à broche (1).

10. Entraînement à broche selon la revendication 9, **caractérisé en ce que** la pièce de liaison (4) est sertie radialement au boîtier d'entraînement à broche (1).
